**Europäisches Patentamt**

**European Patent Office**

**Office européen des brevets**

(19)

(11) Veröffentlichungsnummer : **0 472 997 B1**

(12)

# EUROPÄISCHE PATENTSCHRIFT

(45) Veröffentlichungstag der Patentschrift :
**09.02.94 Patentblatt 94/06**

(51) Int. Cl.⁵ : **C08G 18/67,** C08G 18/81,
C08G 18/73, C09D 175/16,
C09J 175/16, C08L 75/16

(21) Anmeldenummer : **91113552.3**

(22) Anmeldetag : **13.08.91**

(54) **(Meth) Acryloylgruppen enthaltende Polyurethane, ein Verfahren zu ihrer Herstellung und ihre Verwendung.**

(30) Priorität : **25.08.90 DE 4026885**

(43) Veröffentlichungstag der Anmeldung :
**04.03.92 Patentblatt 92/10**

(45) Bekanntmachung des Hinweises auf die
Patenterteilung :
**09.02.94 Patentblatt 94/06**

(84) Benannte Vertragsstaaten :
**BE CH DE ES FR GB IT LI NL SE**

(56) Entgegenhaltungen :
**US-A- 3 499 852**

(73) Patentinhaber : **BAYER AG**
**D-51368 Leverkusen (DE)**

(72) Erfinder : **Meixner, Jürgen, Dr.**
**Josef-Brocker-Dyk 56**
**W-4150 Krefeld (DE)**
Erfinder : **Fischer, Wolfgang, Dr.**
**Eschendonk 6**
**W-4005 Meerbusch 3 (DE)**

## Beschreibung

Die Erfindung betrifft bestimmte (Meth)Acryloylgruppen enthaltende Polyurethane, die durch Strahlenhärtung und auch in Gegenwart von Luftsauerstoff mittels (Hydro)Peroxiden in vernetzte Produkte überführt werden können, ein Verfahren zu ihrer Herstellung und ihre Verwendung als Bindemittel für Überzugs- oder Spachtelmassen, sowie zur Herstellung von Formkörpern.

(Meth)Acryloylgruppen enthaltende Polyurethane, die, wie beispielsweise in der DE-OS 1 644 798, DE-OS 2 115 373 oder DE-OS 2 737 406 beschrieben, als Umsetzungsprodukt von Polyisocyanaten und Hydroxyalkyl(meth)acrylaten erhalten werden, sind seit langem bekannt. Sie werden mit Hilfe von energiereichen Strahlen wie UV- oder Elektronenstrahlen gehärtet und dienen zum Beschichten von z.B. Holz oder zur Herstellung von Überzügen zu graphischen Zwecken.

Die DE-OS 3 737 244 beschreibt (Meth)Acryloylgruppen enthaltende Polyurethane, die neben der Strahlenhärtung auch einer peroxidischen Härtung zugänglich sind. Dieser Vorteil muß jedoch mit der Verwendung von speziellen, in einem getrennten Arbeitsschritt hergestellten, Isocyanuratgruppen aufweisenden Polyisocyanaten als Ausgangsmaterial zur Herstellung der Polyurethane erkauft werden.

Die der Erfindung zugrundeliegende Aufgabe bestand darin, (Meth)Acryloylgruppen enthaltende Polyurethane auf Basis von einfachen, wohlfeilen aliphatischen Diisocyanaten zur Verfügung zu stellen, die ebenfalls nicht nur durch Strahlenhärtung sondern auch in Anwesenheit von Luftsauerstoff peroxidisch ausgehärtet werden können, und die gleichzeitig den Systemen des genannten Standes der Technik bezüglich der Viskosität und der technischen Eigenschaften der resultierenden Produkte mindestens ebenbürtig sind.

Diese Aufgabe konnte durch die Bereitstellung der nachstehend näher beschriebenen erfindungsgemäßen (Meth)Acryloylgruppen enthaltenden Polyurethane gelöst werden.

Gegenstand der Erfindung sind (Meth)Acryloylgruppen enthaltende Polyurethane, die durch Umsetzung von

a) 25 - 55 Gew.-% einer Polyisocyanatkomponente, bestehend zumindest zu 50 NCO-Äquivalent-% aus mindestens einem acyclischen, aliphatischen Diisocyanat mit 6 bis 12 Kohlenstoffatomen im Kohlenwasserstoffrest,
b) 10 - 30 Gew.-% einer (Meth)Acrylolgruppen aufweisenden Alkoholkomponente, bestehend im wesentlichen aus mindestens einem (Meth)Acryloylgruppen aufweisenden einwertigen Alkohol des Molekulargewichtsbereichs 116 bis 1000,
c) 11 - 35 Gew.-% mindestens eines $\beta$, $\gamma$-ethylenisch ungesättigten Etheralkohols mit 5 bis 14 Kohlenstoffatomen,
d) 8 - 40 Gew.-% mindestens eines mehrwertigen Alkohols,
wobei sich die genannten Prozentsätze zu 100 ergänzen, unter Einhaltung eines NCO/OH-Äquivalentverhältnisses, bezogen auf alle Ausgangskomponenten a) bis d), von 0,5:1 bis 1:1 hergestellt worden sind.

Gegenstand der Erfindung ist auch ein Verfahren zur Herstellung von (Meth)Acryloylgruppen enthaltenden Polyurethanen durch Umsetzung von

a) 25 - 55 Gew.-% einer Polyisocyanatkomponente, bestehend zumindest zu 50 NCO-Äquivalent-% aus mindestens einem acyclischen, aliphatischen Diisocyanat mit 6 bis 12 Kohlenstoffatomen im Kohlenwasserstoffrest,
b) 10 - 30 Gew.-% einer (Meth)Acrylolgruppen aufweisenden Alkoholkomponente, bestehend im wesentlichen aus mindestens einem (Meth)Acryloylgruppen aufweisenden einwertigen Alkohol des Molekulargewichtsbereichs 116 bis 1000,
c) 11 - 35 Gew.-% mindestens eines $\beta$, $\gamma$-ethylenisch ungesättigten Etheralkohols mit 5 bis 14 Kohlenstoffatomen,
d) 8 - 40 Gew.-% mindestens eines mehrwertigen Alkohols,
wobei sich die genannten Prozentsätze zu 100 ergänzen, unter Einhaltung eines NCO/OH-Äquivalentverhältnisses, bezogen auf alle Ausgangskomponenten a) bis d), von 0,5:1 bis 1:1.

Gegenstand der Erfindung ist schließlich auch die Verwendung dieser (Meth)Acryloylgruppen enthaltenden Polyurethane zur Herstellung von Formkörpern inklusive ausgehärteten Kitten, Spachtelmassen oder Lacküberzügen.

Die erfindungsgemäß einzusetzende Polyisocyanatkomponente a) besteht zu mindestens 50 NCO-Äquivalent-% aus einem acyclischen, aliphatischen Diisocyanat mit 6 bis 12 Kohlenstoffatomen im Kohlenwasserstoffrest.

Die Polyisocyanatkomponente a) kann bis zu 50 NCO-Äquivalent-% an anderen Polyisocyanaten mit aliphatisch, aromatisch und/oder cycloaliphatisch gebundenen Isocyanatgruppen enthalten. Bei diesen anderen Polyisocyanaten handelt es sich beispielsweise um Toluylendiisocyanat, 1-Isocyanato-3,3,5-trimethyl-5-isocyanatomethyl-cyclohexan (IPDI), Isocyanuratgruppen aufweisende Polyisocyanate auf Basis von IPDI oder Hexamethylendiisocyanat oder Urethangruppen aufweisende Polyisocyanate auf Basis von IPDI oder Hexamethylendiisocyanat oder mehrwertigen Alkoholen wie beispielsweise Trimethylolpropan. Vorzugsweise besteht die Polyisocyanatkomponente a) zu mindestens 80 NCO-Äquivalent-% aus einem organischen, aliphatischen Diisocyanat mit 6 bis 12 Kohlenstoffatomen.

Besonders bevorzugt besteht die Polyisocyanatkomponente a) aus Hexamethylendiisocyanat oder Trimethylhexamethylendiisocyanat (= 2,2,4- und/oder 2,4,4-Trimethylhexamethylendiisocyanat).

Bei der Komponente b) handelt es sich um (Meth)Acryloylgruppen aufweisende einwertige Alkohole bzw. um beliebige Gemische derartiger Alkohole. Hierunter sind sowohl eine freie Hydroxylgruppe aufweisende Ester der Acrylsäure oder der Methacrylsäure mit zweiwertigen Alkoholen zu verstehen wie beispielsweise 2-Hydroxethyl-, 1-Methyl-2-hydroxyethyl-, 2-Hydroxypropyl-, 3-Hydroxypropyl- oder die isomeren Hydroxybutyl-(meth)acrylate als auch beliebige Gemische derartiger Verbindungen. Außerdem kommen als Komponente b) bzw. als Teil der Komponente b) auch einwertige (Meth)Acryloylgruppen aufweisende Alkohole oder im wesentlichen aus derartigen Alkoholen bestehende Umsetzungsprodukte in Betracht, die durch Veresterung von n-wertigen Alkoholen mit (Meth) Acrylsäure erhalten werden, wobei als Alkohole auch Gemische von unterschiedlichen Alkoholen eingesetzt werden können, so daß n für eine ganze oder im statistischen Mittel gebrochene Zahl von größer als 2 bis 4, vorzugsweise 3 steht, und wobei pro Mol der genannten Alkohole von (n -0,8) bis (n -1,2), vorzugsweise (n -1) Mol (Meth)Acrylsäure eingesetzt werden. Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth)Acrylsäure im genannten Molverhältnis.

Die Verbindungen der Komponente b) weisen ein Molekulargewicht von 116 bis 1000, vorzugsweise von 116 bis 750 und besonders bevorzugt von 116 bis 158 auf.

Bei der Komponente c) handelt es sich um mindestens einen $\beta$, $\gamma$-ethylenisch ungesättigten Etheralhokol mit 5 bis 14 Kohlenstoffatomen. Hierunter sind Verbindungen zu verstehen, die neben einer alkoholischen Hydroxylgruppe mindestens einen, vorzugsweise mindestens zwei $\beta$, $\gamma$-ethylenisch ungesättigte Etherreste der Struktur

$$C = C - C - O -$$

enthalten. Beispiele sind 2-Hydroxyethyl-allylether, Glycerindiallylether, Trimethylolpropandiallylether und Pentaerythrittriallylether. Bevorzugt ist Trimethylolpropandiallylether. Bei diesen Verbindungen handelt es sich im allgemeinen um technische Produkte, d.h. um Umsetzungsprodukte der den Etherverbindungen zugrundeliegenden mehrwertigen Alkohole mit Allylchlorid, die neben einwertigen Etheralkoholen untergeordnete Mengen an den entsprechenden zweiwertigen Alkoholen und/oder an den entsprechenden, hydroxylgruppenfreien Allylethern aufweisen.

Bei der Komponente d) handelt es sich um mehrwertige Alkohole des Molekulargewichtsbereichs 62 - 2000. In Betracht kommen insbesondere einfache, mindestens dreiwertige Alkohole des Molekulargewichtsbereichs 92 bis 200 wie beispielsweise Glycerin, Trimethylolpropan, Pentaerythrit und/oder Sorbit. Außerdem in Betracht kommen Polyetherpolyole, die durch Alkoxylierung von einfachen Alkoholen der beispielhaft genannten Art zugänglich sind, und die Molekulargewichte von bis zu 2000, vorzugsweise 1000 aufweisen; ferner Polyesterpolyole des genannten Molekulargewichtsbereichs, die durch Umsetzung von mehrwertigen Alkolen und mehrwertigen Säuren oder Anhydriden mehrwertiger Säuren in an sich bekannter Weise zugänglich sind,. Es ist auch möglich, kleinere Mengen an Diolen wie Ethylenglykol, Thiodiglykol oder Hexandiol mitzuverwenden. Die Mitverwendung derartiger Diole erfolgt jedoch vorzugsweise allenfalls in Mengen von bis zu 50 Hydroxyl-Äquivalent-%, bezogen auf die Komponente d).

Die Herstellung der Polyurethane durch Umsetzung der genannten Ausgangskomponenten kann in Substanz oder in gegenüber Isocyanaten inerten Lösungsmitteln, wie beispielsweise Aceton, Methylethylketon, Cyclohexan, Toluol, Ethylacetat, Butylacetat, niedermolekularen Estern der (Meth)Acylsäuren oder Gemischen derartiger Lösungsmittel erfolgen, wobei vorzugsweise Reaktionstemperaturen von 20 bis 100°C, insbesondere 40 bis 80°C eingehalten werden. Es kann dabei beispielsweise so vorgegangen werden, daß die Polyisocyanatkomponente a) vorgelegt wird und die Komponenten b) und c) zusammen oder nacheinander (wobei die Reihenfolge unwesentlich ist) zugegeben werden und dann die Komponente d) zugegeben wird, oder aber so, daß die Komponenten b), c) und d) vorgelegt werden und die Polyisocyanatkomponente a) zugegeben wird.

In jedem Fall wird die Umsetzung, bei der ein NCO/OH-Äquivalentverhältnis von 0,5:1 bis 1:1 vorliegt, unter milden Bedingungen, wie z.B. innerhalb des oben genannten Temperaturbereichs solange durchgeführt, bis der NCO-Gehalt auf unter 0,1 Gew.-% abgefallen ist.

Die zum Polyurethan führende Additionsreaktion kann in an sich bekannter Weise mittels geeigneter Katalysatoren, wie beispielsweise Zinnoctoat, Dibutylzinndilaurat oder tertiären Aminen wie Dimethylbenzylamin beschleunigt werden. Das als Umsetzungsprodukt anfallende Urethan(meth)acrylat kann andererseits durch Zugabe geeigneter Inhibitoren und Antioxidantien wie beispielsweise Phenole und/oder Hydrochinone, in Mengen von jeweils 0,001 bis 0,3 Gew.-%, bezogen auf Urethan(meth)acrylat, vor vorzeitiger und unerwünschter Polymerisation geschützt werden. Der Zusatz dieser Hilfsmittel kann vor, gleichzeitig, und/oder im Anschluß an die Umsetzung erfolgen.

Die erfindungsgemäßen Produkte stellen im allgemeinen klare, mittel- bis hochviskose und farblose Flüssigkeiten dar. Die Überführung der (Meth)Acryloylgruppen enthaltenden Polyurethane, die Kunststoffvorläufer darstellen, in ausgehärtete Kunststoffe erfolgt im allgemeinen nach vorangegangener Formgebung.

Der Begriff "Formkörper" soll im Rahmen der Erfindung sowohl beliebige dreidimensionale, ausgehärtete Formkörper als auch ausgehärtete Kitte oder Spachtelmassen oder Flächengebilde, insbesondere ausgehärtete Lacküberzüge umfassen. Besonders bevorzugt werden die erfindungsgemäßen Polyurethane als Lackbindemittel zur Herstellung von Lacküberzügen auf beispielsweise Papier, Kartonage, Leder, Holz, Kunststoffe, Vlies, Textilien, keramische Materialien, mineralische Materialien, Glas, Metall, Kunstleder eingesetzt.

Je nach angestrebtem Verwendungszweck und in Abhängigkeit von der Viskosität können die (Meth)Acryloylgruppen aufweisenden Polyurethane vor der Formgebung mit inerten Hilfs- und Zusatzmitteln der unterschiedlichsten Art abgemischt werden.

Hierzu gehören Füllstoffe, Pigmente, Farbstoffe, Thixotropiermittel, Glättmittel, Mattierungsmittel und Verlaufsmittel, die in üblichen Mengen eingesetzt werden können. Insbesondere zur Herstellung von Lacküberzügen können die (Meth)Acryloylgruppen aufweisenden Polyurethane auch in an sich bekannten Lacklösungsmitteln der bereits oben beispielhaft genannten Art gelöst, mit copolymerisierbaren Monomeren abgemischt oder in Wasser emulgiert zum Einsatz gelangen.

Beispiele für geeignete copolymerisierbare Monomere sind organische Verbindungen, die mindestens eine copolymerisierbare olefinische Doppelbindung pro Molekül und bei 23°C eine Viskosität von maximal 500 mPa.s aufweisen. Hierzu gehören beispielsweise Styrol, 1,6-Hexandioldiacrylat, Trimethylolpropantriacrylat oder N-Vinylpyrrolidon.

Die inerten Lösungsmittel und auch die copolymerisierbaren Monomeren können in Mengen von jeweils bis zu 100 Gew.-%, vorzugsweise bis zu 50 Gew.-%, bezogen auf das Gewicht der (Meth)Acryloylgruppen aufweisenden Polyurethane eingesetzt werden.

Es ist auch möglich, gleichzeitig sowohl inerte Lösungsmittel der beispielhaft genannten Art als auch copolymerisierbare Monomere der beispielhaft genannten Art einzusetzen.

Falls die (Meth)Acryloylgruppen aufweisenden Polyurethane aus wäßriger Emulsion verarbeitet werden sollen, kann die Herstellung entsprechender wäßriger Emulsionen beispielsweise mit Hilfe externer Emulgatoren und gegebenenfalls üblicher in der Emulsionstechnik angewandter Hilfsmittel erfolgen.

Hierfür geeignete Emulgatoren sind bekannt und z.B. in Ullmanns Encyclopädie der tech. Chemie, Bd. 10, 4. Auflage, S. 449 ff. beschrieben.

Bevorzugte Emulgatoren sind copolymerisierbare (Meth)Acryloylgruppen enthaltende Polyurethanemulgatoren, wie sie in der DE-OS 3 900 257 beschrieben sind.

Die wäßrigen Emulsionen enthalten im allgemeinen 10 bis 70 Gew.-%, vorzugsweise 30 bis 70 Gew.-% der erfindungswesentlichen (Meth)Acryloylgruppen aufweisenden Polyurethane. Die Herstellung der Emulsionen kann durch Einrühren von Wasser in das Gemisch aus erfindungsgemäßen Polyurethan(meth)acrylat und Emulgator z.B. durch einfaches Rühren oder mittels Dissolver erfolgen.

Zur Ausbildung einer feinteiligen Emulsion, d.h. zur besseren Einbringung der Schwerkräfte ist portionsweise Wasserzusatz bei Temperaturen unter 30°C vorteilhaft. Bei optimaler Scherung werden Öl-in-Wasser-Emulsionen gebildet.

Die Aushärtung der erfindungsgemäß verwendeten erfindungsgemäßen Produkte erfolgt, gegebenenfalls nach Verdunsten von flüchtigen Hilfsmitteln wie inerte Lösungsmittel oder Wasser, entweder mittels energiereicher Strahlung, wie UV-Licht, Elektronen- oder Gammastrahlen oder durch Härtung mit Metallsalzen von Sikkativen und (Hydro)Peroxiden bei Temperaturen zwischen Raumtemperatur und 250°C. Der Zusatz anderer Verbindungen, die durch Bildung von Radikalen eine Vernetzungsreaktion starten können, sind ebenfalls möglich. Gleichfalls ist es möglich, eine Kombination aus einer durch (Hydro)Peroxide gestarteten und einer durch energierreicher Strahlung erfolgten Vernetzung durchzuführen, um z.B. eine deckend pigmentierte Beschichtung nach DE-OS 3 612 442 zu erhalten.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in der Monographie von J. Korsar, Light-Sensitive Systems, J. Wiley & Sons, New-York - London - Sydney 1965, beschrieben sind.

Weiterhin gut geeignet sind Benzoinether wie Benzoinisopropylether, Benzilketale, wie z.B. Benzildimethylketal und Hydroxyalkylphenone, wie z.B. 2-Hydroxy-2-methylphenylpropan-1-on.

Die erwähnten Fotoiniatoren, die je nach Verwendungszweck der erfindungsgemäßen Masse in Mengen zwischen 0,1 und 10 Gew.-%, vorzugseise 0,1 bis 5 Gew.-%, bezogen auf das Gewicht der Reaktionsprodukte, eingesetzt werden, können als einzelne Substanz oder, wegen häufiger vorteilhafter synergistischer Effekte, auch in Kombination miteinander verwendet werden.

Die gegebenenfalls eingesetzten Sikkative sind z.B. Cobalt-, Blei- oder Mangansalze von Säuren wie Leinölfettsäure, Naphtensäure oder von Essigsäure und Isooctansäure. Sie werden, falls überhaupt, im allgemeinen in solchen Mengen eingesetzt, daß der Metallgehalt, bezogen auf das Gewicht der dispergiert vorliegenden hydrophilen Polyurethane, 0,001 bis 1 Gew.-% entspricht.

Als (Hydro)Peroxide seien beispielhaft genannt: Dicumylperoxid, Di-tert.-butylperoxid, Benzoylperoxid, Cyclohexanonperoxid, Methylethylketonperoxid, Acetylacetonperoxid, Dinonylperoxid, Bis-(4-tert.-butylcyclohexyl)peroxydicarbonat, tert.-Butylhydroperoxid, 2,5-Dimethylhexan-2,5-hydroperoxid, Diisopropyl-benzolmonohydroperoxid und Wasserstoffperoxid. Vorzugsweise werden diese (Hydro)Peroxide in Mengen von 1 bis 10 Gew.%, bezogen auf das Gewicht der (Meth)Acryloylgruppen aufweisenden Polyurethane eingesetzt.

In den nachfolgenden Beispielen beziehen sich alle Prozentangaben auf Gewichtsprozente.

Beispiele

Die in Tabelle 1 genannte Menge an Komponente a) wird zusammen mit 0,2 % Zinndioctoat und 0,1 % 2,6-Di-t.-butyl-p.-kresol in Butylacetat (siehe Tabelle) gelöst und unter Durchleiten von Luft auf 50°C erwärmt. Dann wird die in Tabelle 1 genannte Menge an Komponente b), dann die genannte Menge an Komponente c), dann die genannte Menge an Komponente d) zugetropft. Hierbei soll eine sich durch die exotherme Reaktion ergebene Reaktionstemperatur von 60°C nicht überschritten werden. Anschließend wird die Mischung solange bei 60°C gehalten, bis der NCO-Gehalt auf kleiner 0,1 % gefallen ist.

## Tabelle 1

| | Beispiele | | | | | Vergleichsbeispiele | | |
|---|---|---|---|---|---|---|---|---|
| | 1 | 2 | 3 | 4 | 5 | 6 | 7 | 8 |
| **Einwaage (%)** | | | | | | | | |
| **Komponente a)** | | | | | | | | |
| Hexamethylendiisocyanat | 44,5 | | 43,7 | 38,7 | 45,8 | 49,0 | 42,3 | |
| Trimethylhexamethylendi-isocyanat* | | 50,1 | | | | | | |
| Isophorondiisocyanat | | | | | | | | 51,5 |
| **Komponente b)** | | | | | | | | |
| Hydroxyethylacrylat | 15,4 | 13,8 | | 13,4 | 15,8 | 28,7 | 8,8 | 13,4 |
| Hydroxyethylmethacrylat | | | 16,9 | | | | | |
| **Komponente c)** | | | | | | | | |
| Trimethylolpropandiallyl-ether | 28,4 | 25,5 | 27,9 | 24,6 | 29,2 | 9,4 | 37,7 | 24,8 |
| **Komponente d)** | | | | | | | | |
| Trimethylolpropan 4fach ethoxyliertes | 11,7 | 10,6 | 11,5 | | | 12,9 | 11,2 | 10,3 |
| Trimethylolpropan | | | | 23,3 | | | | |
| Pentaerythrit | | | | | 9,2 | | | |
| Butylacetat | 25,0 | 25,0 | 25,0 | -- | 33,3 | 25,0 | 25,0 | 33,3 |
| Viskosität (23°C, mPa·s) | 5188 | 15640 | 5460 | 197380 | 1031 | krist. | 5576 | 1077 |

* Technisches Gemisch der 2,2,4- und 2,4,4-Isomeren

Verwendungsbeispiele

Das Produkt aus Vergleichsbeispiel 6 konnte nicht eingesetzt werden, da es wegen Kristallinität nicht applizierbar war. Zur besseren Übersicht entspricht die Numerierung der nachstehenden Vergleichsbeispiele der Numerierung der vorstehenden Herstellungsbeispiele.

a) Fotochemische Härtung

Die Produkte der restlichen Beispiele und Vergleichsbeispiele werden mit jeweils 5 % Benzophenon versetzt. Nach Auftragen der Lackfilme auf Karton (10 $\mu$m Auftragsstärke) werden diese unter einem Hanoviastrahler (80 W/cm, 10 cm Abstand) durchbewegt. Der in Tabelle 2 für die Reaktivität angegebene Wert gibt diejenige Bandgeschwindigkeit an, bei der ein Lösungsmittel- und kratzfester Überzug erzielt wurde.

"Lösemittelfest" bedeutet in diesem Fall, daß der Lackfilm nach mindestens 20 Doppelhüben mit einem in Butylacetat getränkten Tuch noch einwandfrei aussieht.

b) Peroxidische Härtung

Die Produkte der erfindungsgemäßen Beispiele sowie der Vergleichsbeispiele 7 und 8 werden mit 3 % tert.-Butylperbenzoat und 2 % Cobaltoctoat (2,2 % Metallgehalt) versetzt. Nach Auftragen der Lackfilme auf Glasplatten (90 $\mu$m Auftragsstärke) werden sie bei 80°C erhitzt.

In Tabelle 2 sind die Zeiten angegeben, die die Lackfilme benötigen, um klebfrei auszuhärten. Nach der Trocknung sind alle Lackfilmoberflächen kratzfest außer der des Vergleichsbeispiels 8.

Tabelle 2

| | Beispiele | | | | | Vergleichsbeispiele | |
|---|---|---|---|---|---|---|---|
| | 1 | 2 | 3 | 4 | 5 | 7 | 8 |
| **Fotochemische Härtung** Reaktivität (m/min) | 15 | 15 | 15 | 15 | 20 | 10 | 10 |
| **Peroxidische Härtung** Trockenzeit (min) | 5 | 10 | 10 | 5 | 5 | 25 | 10 |
| kratzfest | ja | ja | ja | ja | ja | ja | nein |

**Patentansprüche**

1. (Meth)Acryloylgruppen enthaltende Polyurethane, die durch Umsetzung von
   a) 25 - 55 Gew.-% einer Polyisocyanatkomponente, bestehend zumindest zu 50 NCO-Äquivalent-%

EP 0 472 997 B1

8

EP 0 472 997 B1

aus mindestens einem acyclischen, aliphatischen Diisocyanat mit 6 bis 12 Kohlenstoffatomen im Kohlenwasserstoffrest,

b) 10 - 30 Gew.-% einer (Meth)Acrylolgruppen aufweisenden Alkoholkomponente, bestehend im wesentlichen aus mindestens einem (Meth)Acryloylgruppen aufweisenden einwertigen Alkohol des Molekulargewichtabereichs 116 bis 1000,

c) 11 - 35 Gew.-% mindestens eines β, γ-ethylenisch ungesättigten Etheralkohols mit 5 bis 14 Kohlenstoffatomen,

d) 8 - 40 Gew.-% mindestens eines mehrwertigen Alkohols,

wobei sich die genannten Prozentsätze zu 100 ergänzen, unter Einhaltung eines NCO/OH-Äquivalentverhältnisses, bezogen auf alle Ausgangskomponenten a) bis d), von 0,5:1 bis 1:1 hergestellt worden sind.

2. Verfahren zur Herstellung von (Meth)Acryloylgruppen enthaltenden Polyurethanen durch Umsetzung von

a) 25 - 55 Gew.-% einer Polyisocyanatkomponente, bestehend zumindest zu 50 NCO-Äquivalent-% aus mindestens einem acyclischen, aliphatischen Diisocyanat mit 6 bis 12 Kohlenstoffatomen im Kohlenwasserstoffrest,

b) 10 - 30 Gew.-% einer (Meth)Acrylolgruppen aufweisenden Alkoholkomponente, bestehend im wesentlichen aus mindestens einem (Meth)Acryloylgruppen aufweisenden einwertigen Alkohol des Molekulargewichtsbereichs 116 bis 1000,

c) 11 - 35 Gew.-% mindestens eines β, γ-ethylenisch ungesättigten Etheralkohols mit 5 bis 14 Kohlenstoffatomen,

d) 8 - 40 Gew.-% mindestens eines mehrwertigen Alkohols,

wobei sich die genannten Prozentsätze zu 100 ergänzen, unter Einhaltung eines NCO/OH-Äquivalentverhältnisses, bezogen auf alle Ausgangskomponenten a) bis d), von 0,5:1 bis 1:1.

3. Verwendung der Meth)Acryloylgruppen enthaltenden Polyurethane gemäß Anspruch 1 zur Herstellung von Formkörpern inklusive ausgehärteten Kitten, Spachtelmassen oder Lacküberzügen.

## Claims

1. Polyurethanes containing (meth)acryloyl groups which have been produced by reaction of

a) 25 to 55% by weight of a polyisocyanate component of which at least 50 NCO-equivalent-% consists of at least one acyclic aliphatic diisocyanate containing 6 to 12 carbon atoms in the hydrocarbon radical,

b) 10 to 30% by weight of an alcohol component containing (meth)acryloyl groups consisting essentially of a monohydric alcohol containing (meth)acryloyl groups and having a molecular weight in the range from 116 to 1000,

c) 11 to 35% by weight of at least one β,γ-ethylenically unsaturated ether alcohol containing 5 to 14 carbon atoms,

d) 8 to 40% by weight of at least one polyhydric alcohol,

the percentages mentioned adding up to 100, at an NCO:OH equivalent ratio, based on all the starting components a) to d), maintained at 0.5:1 to 1:1.

2. A process for the production of polyurethanes containing (meth)acryloyl groups by reaction of

a) 25 to 55% by weight of a polyisocyanate component of which at least 50 NCO-equivalent-% consists of at least one acyclic aliphatic diisocyanate containing 6 to 12 carbon atoms in the hydrocarbon radical,

b) 10 to 30% by weight of an alcohol component containing (meth)acryloyl groups consisting essentially of at least one monohydric alcohol containing (meth)acryloyl groups and having a molecular weight in the range from 116 to 1000,

c) 11 to 35% by weight of at least one β,γ-ethylenically unsaturated ether alcohol containing 5 to 14 carbon atoms,

d) 8 to 40% by weight of at least one polyhydric alcohol,

the percentages mentioned adding up to 100, at an NCO:OH equivalent ratio, based on all the starting components a) to d), maintained at 0.5:1 to 1:1.

3. The use of the polyurethanes containing (meth)acryloyl groups claimed in claim 1 for the production of moldings, including cured cements, surfacing compounds or paint coatings.

9

**Revendications**

1. Polyuréthannes contenant des groupes (méth)acryloyle, qui ont été préparés par la mise en réaction de
   a) 25 à 55% en poids d'un composant de polyisocyanate constitué au minimum jusqu'à concurrence de 50% d'équivalent NCO d'au moins un diisocyanate aliphatique acyclique contenant de 6 à 12 atomes de carbone dans le radical d'hydrocarbure,
   b) 10 à 30% en poids d'un composant d'alcool présentant des groupes (méth)acryloyle, constitué essentiellement d'au moins un alcool monovalent présentant des groupes (méth)acryloyle, du domaine de poids moléculaire de 116 à 1.000,
   c) 11 à 35% en poids d'au moins un éther-alcool à insaturation éthylénique $\beta,\gamma$ contenant de 5 à 14 atomes de carbone,
   d) 8 à 40% en poids d'au moins un alcool polyvalent,
   les pourcentages mentionnés étant complétés pour obtenir 100, tout en maintenant un rapport d'équivalent NCO/OH, rapporté à tous les composants de départ a) à d), de 0,5:1 à 1:1.

2. Procédé pour la préparation de polyuréthannes contenant des groupes (méth)acryloyle par la mise en réaction de
   a) 25 à 55% en poids d'un composant de polyisocyanate constitué au minimum jusqu'à concurrence de 50% d'équivalent NCO d'au moins un diisocyanate aliphatique acyclique contenant de 6 à 12 atomes de carbone dans le radical d'hydrocarbure,
   b) 10 à 30% en poids d'un composant d'alcool présentant des groupes (méth)acryloyle, constitué essentiellement d'au moins un alcool monovalent présentant des groupes (méth)acryloyle, du domaine de poids moléculaire de 116 à 1.000,
   c) 11 à 35% en poids d'au moins un éther-alcool à insaturation éthylénique $\beta,\gamma$ contenant de 5 à 14 atomes de carbone,
   d) 8 à 40% en poids d'au moins un alcool polyvalent,
   les pourcentages mentionnés étant complétés pour obtenir 100, tout en maintenant un rapport d'équivalent NCO/OH, rapporté à tous les composants de départ a) à d), de 0,5:1 à 1:1.

3. Utilisation des polyuréthannes contenant des groupes (méth)acryloyle selon la revendication 1, pour la préparation de corps moulés, y compris des mastics durcis, des matières de masticage ou encore des revêtements sous forme de vernis, de laques ou de peintures.